(19) **Europäisches Patentamt
European Patent Office
Office européen des brevets**

(11) **EP 4 660 633 A1**

(12) **EUROPEAN PATENT APPLICATION**
published in accordance with Art. 153(4) EPC

(43) Date of publication:
**10.12.2025 Bulletin 2025/50**

(21) Application number: **24749997.3**

(22) Date of filing: **19.01.2024**

(51) International Patent Classification (IPC):
**G01N 35/04** $^{(2006.01)}$      **G01N 35/02** $^{(2006.01)}$

(52) Cooperative Patent Classification (CPC):
**G01N 35/02; G01N 35/04**

(86) International application number:
**PCT/JP2024/001485**

(87) International publication number:
**WO 2024/162044 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2023 JP 2023014667**

(71) Applicant: **HITACHI HIGH-TECH CORPORATION
Tokyo 105-6409 (JP)**

(72) Inventor: **SUGINO Miyuki
Tokyo 105-6409 (JP)**

(74) Representative: **MERH-IP Matias Erny Reichl
Hoffmann
Patentanwälte PartG mbB
Paul-Heyse-Straße 29
80336 München (DE)**

(54) **AUTOMATIC ANALYSIS DEVICE**

(57)    There is provided an automatic analyzer that enhances a degree of freedom in the rotation operation of a reaction disk. A sum total of an amount of rotation of a reaction disk 1 in an analyzer cycle is set. The analyzer cycle includes a photometric rotation period 401 for which the reaction disk is rotated at one turn or more and a first positioning rotation period 402 and a second positioning rotation period 403 for which the reaction disk is stopped at a position corresponding to the sum total at the end of the analyzer cycle.

## FIG. 4

## Description

Technical Field

The present invention relates to an automatic analyzer.

Background Art

Patent Literature 1 discloses an automatic analyzer that shares a reaction disk for mixing and reacting a sample with a reagent or the like in a reaction vessel for a predetermined period of time for measurements in different analytical processes, for example, a biochemical measurement and an immunoassay.

Citation List

Patent Literature

Patent Literature 1: WO No. 2020/217636

Summary of Invention

Technical Problem

The reaction disk holds the reaction vessel at a constant temperature in order to promote reaction of a reaction solution contained in the reaction vessel, and is configured to be rotated by a drive mechanism such as a motor. The reaction disk rotates by a set amount of rotation in an analyzer cycle in which each mechanism of the automatic analyzer operates synchronously. Therefore, processes required for biochemical measurement, such as measurement of the absorbance of the reaction solution, dispensing by a dispensing unit, and loading and unloading of the reaction vessel, are performed periodically, and a measurement procedure according to an analysis item is automatically performed.

However, according to Patent Literature 1, there are issues such as the difficulty in setting the rotational operation of the reaction disk such that no interference occurs between measurements and in creating a measurement plan with minimal throughput loss.

Solution to Problem

An automatic analyzer according to an aspect of the present invention includes: a reaction disk with a plurality of reaction vessels placed on a circumference of a circle, the reaction disk being configured to be rotated; a dispensing unit that dispenses a liquid to a reaction vessel placed on the reaction disk; a spectrophotometer having an optical axis arranged so as to cross the circumference of the circle of the reaction disk; and a control unit, in which the control unit controls the reaction disk and the dispensing unit in synchronization with an analyzer cycle, and a sum total of an amount of rotation of the reaction disk in the analyzer cycle is set, and the analyzer cycle includes a photometric rotation period in which the reaction disk is rotated by one turn or more and a first positioning rotation period and a second positioning rotation period in which the reaction disk is stopped at a position corresponding to the sum total at an end of the analyzer cycle.

An automatic analyzer according to another aspect of the present invention includes a reaction disk with a plurality of reaction vessels placed on a circumference of a circle, the reaction disk being configured to be rotated; a first dispensing unit that dispenses a liquid to a reaction vessel placed on the reaction disk; a second dispensing unit that dispenses a liquid to the reaction vessel placed on the reaction disk; a transport unit that loads the reaction vessel onto the reaction disk; a spectrophotometer having an optical axis arranged so as to cross the circumference of the circle of the reaction disk; and a control unit, in which the control unit controls the reaction disk, the first dispensing unit, the second dispensing unit, and the transport unit in synchronization with an analyzer cycle, a sum total of an amount of rotation of the reaction disk in the analyzer cycle is set, the analyzer cycle includes a photometric rotation period in which the reaction disk is rotated by one turn or more, a first positioning rotation period and a second positioning rotation period in which the reaction disk is stopped at a position corresponding to the sum total at an end of the analyzer cycle, a first suspension period between the first positioning rotation period and the second positioning rotation period, and a second suspension period between the second positioning rotation period and the end of the analyzer cycle, the first dispensing unit, the second dispensing unit, and the transport unit access the reaction vessel that has stopped at a set access position in the first suspension period or the second suspension period, and the sum total of the amount of the rotation of the reaction disk in the analyzer cycle is determined such that $\beta M = \alpha N \pm 2$ is satisfied, where N is a number of reaction vessels placeable on the reaction disk, M is a sum of sum totals of amounts of rotation of two continuous analyzer cycles, and $\alpha$ and $\beta$ are constants.

Advantageous Effects of Invention

It is possible to provide an automatic analyzer with an increased degree of freedom in rotation operation of a reaction disk. Other issues and new features will become apparent from the description of the present specification and the accompanying drawings.

Brief Description of Drawings

FIG. 1 is a diagram showing an example of the overall structure of an automatic analyzer.
FIG. 2 is a detailed access diagram of a reaction disk.

FIG. 3 is a diagram showing measurement cycles of biochemical measurement and immunoassay measurement.

FIG. 4 is a diagram showing a rotation pattern of the reaction disk in one analyzer cycle.

FIG. 5 is a diagram showing examples of the timing of making access from the mechanisms of the automatic analyzer to the reaction disk.

FIG. 6 is a diagram showing measurement procedures that dispense a diluted sample in the reaction vessel.

FIG. 7 is a diagram showing a rotation pattern of the reaction disk corresponding to FIG. 6.

Description of Embodiments

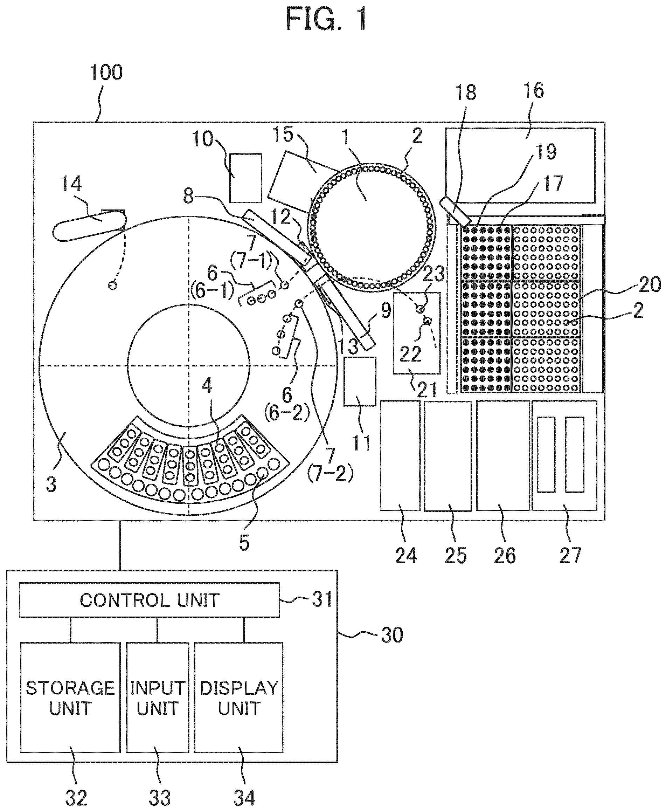

FIG. 1 is a diagram illustrating an example of an overall configuration of an automatic analyzer. The automatic analyzer 100 is a multi-function automatic analyzer that analyzes a plurality of analysis item groups (for example, biochemistry and immunology) in the one analyzer. To downsize the analyzer, the analyzer is configured such that a predetermined mechanism is shared for the plurality of analysis item groups.

The automatic analyzer 100 includes a reaction disk 1, a shared disk 3 that holds both of a reagent and a sample, a first dispensing unit 8 that dispenses a sample and a reagent for biochemical measurement by using a first nozzle, a second dispensing unit 9 that dispenses a sample and a reagent for immunoassay by using a second nozzle, a first pump 10 connected to the first dispensing unit 8, a second pump 11 connected to the second dispensing unit 9, a first washing chamber 12 for cleaning the first nozzle, a second washing chamber 13 for cleaning the second nozzle, a reagent stirring unit 14, a spectrophotometer 15, a detection unit 16 such as a flow cell, a transport unit 18 that takes out, from a tray 19, a tip 17 attached to the second nozzle for immunoassay and transports the tip 17, or takes out, from a tray 20, a reaction vessel 2 for reacting a sample with a reagent and transports the reaction vessel 2, a disposal box 21 for storing the used tip 17 and the reaction vessel 2, an attachment position 22 of the tip 17, a disposal position 23 of the tip 17, a waste liquid tank 24 for storing a used liquid, a water supply tank 25 for biochemical measurement, a water supply tank 26 for immunoassay, and a cleaning fluid vessel 27 for storing a cleaning fluid. In addition, a controller 30 that performs various types of control on mechanisms included in the automatic analyzer 100 is connected.

The reaction disk 1 holds, on its circumference, the reaction vessel 2 containing a mixed liquid of a sample and a reagent. To promote the reaction of the mixed liquid, the reaction vessel 2 on the reaction disk 1 is kept at a constant temperature. The reaction disk 1 is controlled by a drive mechanism such as a motor so as to rotate a distance corresponding to a predetermined number of reaction vessels in each analyzer cycle.

The reaction vessel 2 is a disposable vessel with common specifications for all measurements. For example, reaction vessels 2 placed in odd-numbered positions on the reaction disk 1 are used for biochemical measurement, and reaction vessels 2 placed in even-numbered positions on the reaction disk 1 are used for immunoassay, so that the reaction disk 1 is shared for multiple analysis item groups.

A plurality of reagent vessels 4 and sample vessels 5 are placed on a circumference of the shared disk 3. In this case, an example is described in which the reagent vessels 4 are placed on inner circumference sides of the sample vessels 5, but the sample vessels 5 may be placed on inner circumference sides of the reagent vessel 4, or the reagent vessels 4 and the sample vessels 5 may be placed on the shared disk 3 without distinction between the inner circumference and the outer circumference.

The first dispensing unit 8 for biochemistry dispenses a reagent or a sample from a reagent vessel 4 or a sample vessel 5 to the reaction vessel 2 while tracing an arc track around the rotation axis. On the track of the first dispensing unit 8, a sample aspiration position 7-1 and a reagent aspiration position 6-1 on the shared disk 3, a first dispensing position and a second dispensing position on the reaction disk 1, and the first washing chamber 12 are present.

The second dispensing unit 9 for immunoassay dispenses a reagent or a sample from a reagent vessel 4 or a sample vessel 5 to the reaction vessel 2 while tracing an arc track around its rotation axis. On the track of the second dispensing unit 9, a sample aspiration position 7-2 and a reagent aspiration position 6-2 on the shared disk 3, a third dispensing position and a fourth dispensing position on the reaction disk 1, and the second washing chamber 13 are present. Further, since an immunoassay requires precise measurement and there is a high need to prevent carry over between samples, the second dispensing unit 9 performs dispensing by attaching the tip 17 to the second nozzle. Therefore, the attachment position 22 and the disposal position 23 are present on the track of the second dispensing unit 9. Meanwhile, since a biochemical measurement does not require the same level of precision as an immunoassay, the first dispensing unit 8 does not use the tip 17, and performs dispensing while cleaning the first nozzle in the first washing chamber 12 each time the first dispensing unit 8 performs dispensing.

The first dispensing unit 8 and the second dispensing unit 9 are arranged so as not to physically interfere with each other in terms of the tracks of the first and second nozzles and their respective mechanisms. Each of the first dispensing unit 8 and the second dispensing unit 9 aspirates a sample and a reagent, and then performs aspirating and dispensing operations within the reaction vessel 2 to stir and mix the sample and the reagent. Regarding a sample to be used in biochemical and immunological analyses, the first dispensing unit 8 dispenses the sample in a case where a biochemical measurement is performed, and the second dispensing unit 9 dispenses the sample in a case where an immunoassay is performed.

For the biochemical measurement, the spectrophotometer 15 arranged around the reaction disk 1 is used. The spectrophotometer 15 is provided with a light source and a detector (not illustrated), and measures the absorbance of a reaction solution by irradiating the reaction solution in the reaction vessel 2 with light and detecting the transmitted light and scattered light obtained by dispersing the light.

The detection unit 16 is used for the immunoassay. The reaction solution in which the reaction has been promoted by the reaction disk 1 is sent to the detection unit 16 and analyzed by electrochemiluminescence, chemiluminescence, or the like. A reagent, a labeling substance, and the structure and physical properties of a detection region are selected for each of the measurements, and a detector (for example, a photomultiplier tube) measures the amount of luminescence resulting from a luminescence reaction of the labeling substance.

The transport unit 18 transports, to the disposal box 21, the reaction vessel 2 for which the measurement of the absorbance has been completed on the reaction disk 1, and disposes of the reaction vessel 2. In addition, the transport unit 18 transports, to the detection unit 16, the reaction vessel 2 containing the reaction solution in which the reaction has been promoted by the reaction disk 1. Further, the transport unit 18 transports, to the disposal box 21, the reaction vessel 2 analyzed by the detection unit 16, and disposes of the reaction vessel 2.

The controller 30 is connected to each of the mechanisms of the automatic analyzer 100 (a diagram of the detailed connection is omitted), and includes a control unit 31, a storage unit 32, an input unit 33, and a display unit 34. The control unit 31 controls the dispensing operations of the first dispensing unit 8 and the second dispensing unit 9, the rotation operation of the reaction disk 1, the rotation operation of the shared disk 3, the transport operation of the transport unit 18, the operations of aspirating and discharging a liquid by the dispensing nozzles, and the like. The storage unit 32 stores a program and various types of data for these operations. The control unit 31 reads and executes the program from the storage unit 32 to implement an operation described later. The input unit 33 receives an instruction from a user. The display unit (display) 34 displays results obtained from analysis results and the like to the user. The input unit 33 and the display unit 34 may be integrated as a user interface.

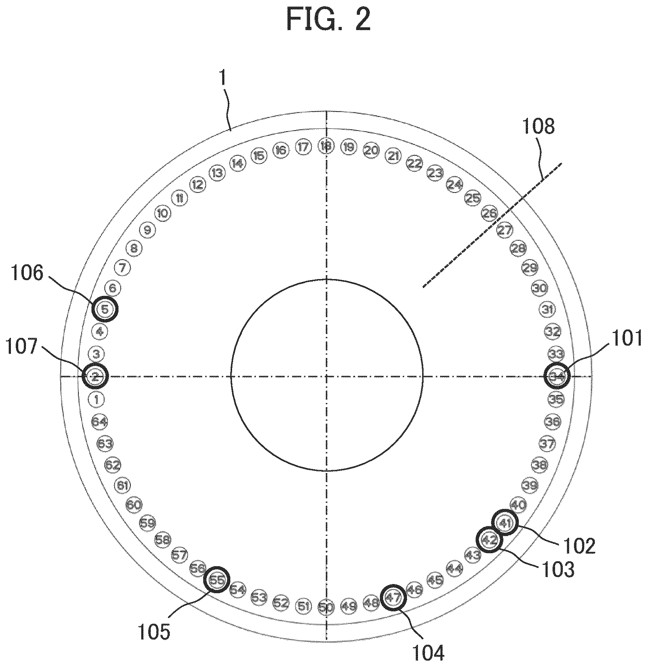

In the automatic analyzer 100, the reaction disk 1 not only promotes the reaction of the reaction solution in the reaction vessel 2, but also plays a role in moving the reaction vessel 2 to a position accessible from each of the mechanisms of the automatic analyzer 100. FIG. 2 is a detailed diagram of the reaction disk 1. N reaction vessels 2 can be placed on the reaction disk 1, and circled numbers indicate placement positions of the reaction vessels 2. FIG. 2 illustrates an example in which N = 64, and the numbers indicating the placement positions are allocated clockwise from 1 to 64. In addition, FIG. 2 illustrates access positions 101 to 107 that the mechanisms access the reaction disk 1 when the reaction disk 1 is at a home position. The access positions are defined for the respective mechanisms.

The reaction vessel loading position 101 is a position where the transport unit 18 loads a reaction vessel 2 from the tray 20 onto the reaction disk 1. The reaction vessel unloading position (biochemistry) 102 is a position where the transport unit 18 takes out, from the reaction disk 1, a reaction vessel 2 for which the measurement of absorbance has been completed to the disposal box 21 in order to transport the reaction vessel 2 into the disposal box 21 and dispose of the reaction vessel 2. The reaction vessel unloading position (immunity) 103 is a position where the transport unit 18 takes out the reaction vessel 2 from the reaction disk 1 in order to transport the reaction vessel 2 to the detection unit 16 for immunoassay.

The first dispensing position 106 and the second dispensing position 107 are positions where the first dispensing unit 8 dispenses liquids such as a reagent and a sample to be used for biochemical measurement. Similarly, the third dispensing position 104 and the fourth dispensing position 105 are positions where the second dispensing unit 9 dispenses liquids such as a reagent and a sample to be used for immunoassay. In addition, in the biochemical measurement, the spectrophotometer 15 measures the absorbance of the reaction solution in the reaction vessel 2. When the reaction disk 1 rotates, the reaction vessel 2 placed on the reaction disk 1 passes through an optical axis 108 of the spectrophotometer 15. At this timing, the absorbance measurement is performed.

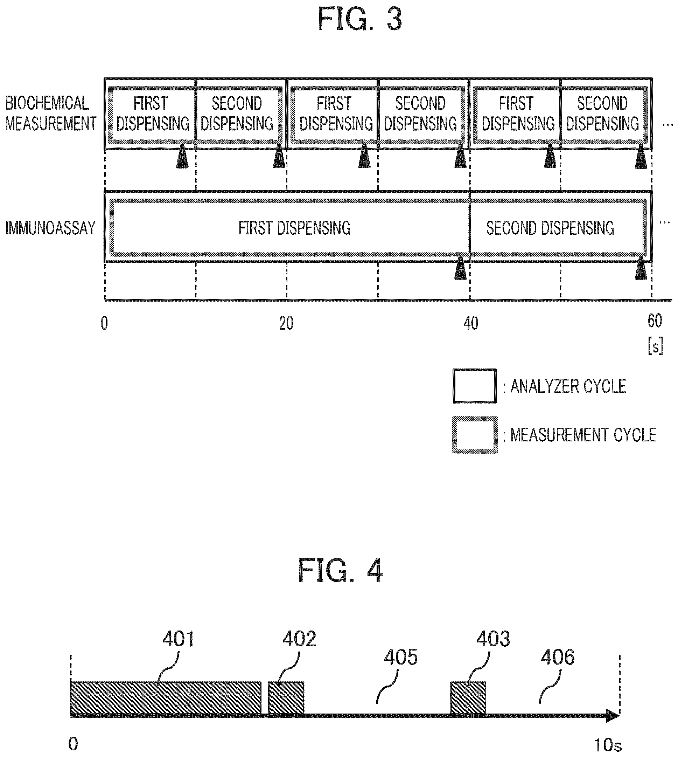

FIG. 3 illustrates measurement cycles of the biochemical measurement and the immunoassay. Each of the mechanisms of the automatic analyzer 100 is controlled so as to operate in synchronization with an analyzer cycle of, for example, 10 seconds as a unit such that the absorbance measurement of the biochemical measurement can be periodically performed. In addition, the biochemical measurement is controlled to be performed in a biochemical measurement cycle of two analyzer cycles per cycle. In the first analyzer cycle of the biochemical measurement cycle, the first dispensing is performed at the first dispensing position 106. In the second analyzer cycle of the biochemical measurement cycle, the second dispensing is performed at the second dispensing position 107. In the drawing, timings at which the dispensing units perform the dispensing operations are indicated by black triangles. Similarly, the immunoassay is controlled to be performed in an immunoassay cycle of six analyzer cycles per cycle. In the fourth analyzer cycle of the immunoassay cycle, the first dispensing is performed at the third dispensing position 104. In the sixth analyzer cycle of the immunoassay cycle, the second dispensing is performed at the fourth dispensing position 105.

In this case, the throughput of the analyzer for the biochemical measurement is one test per 20 seconds. That is, biochemical measurement of a sample can be started at time intervals of 20 seconds as the shortest time, and measurement results can be continuously acquired after a reaction time required for the biochemical measurement on the reaction disk 1 has elapsed. Similarly, the throughput of the analyzer for the immunoassay is one test per 60 seconds. That is, immunoassay of a sample can be started at time intervals of 60 seconds as the shortest time, and the sample is sent to the detection unit 16 and measured by the detection unit 16 after a reaction time required for the immunoassay has elapsed.

For each analysis item, in each of the measurements, measurement procedures, such as the number of reagents to be dispensed, the timing of dispensing the reagents, and a reaction time for reacting a sample with the reagents, are determined. Therefore, movements to the access positions illustrated in FIG. 2 need be controlled in accordance with the measurement cycle illustrated in FIG. 3 such that the dispensing and the loading and unloading of the reaction vessel are performed in accordance with the measurement procedures defined in the analysis items. In the multi-function automatic analyzer according to the present embodiment, in the reaction disk 1, the two different operations, which are the biochemical measurement and the immunoassay and have different measurement principles and different measurement cycles, need to be controlled in parallel. Therefore, the operations of the mechanisms in the measurement cycle need to be controlled so as not to interfere with each other.

In the present embodiment, first, to control the rotation of the reaction disk for the absorbance measurement and the rotation to an access position without interference, the rotation of the reaction disk 1 in one analyzer cycle is controlled while being divided into the rotation for the absorbance measurement and the rotation for positioning. FIG. 4 illustrates a rotation pattern of the reaction disk 1 in one analyzer cycle. A rotation period 401 is a period for rotating for the absorbance measurement, and rotation periods 402 and 403 are periods for rotating for positioning to the access positions. The rotation period 401 is referred to as a photometric rotation period, and the rotation periods 402 and 403 are referred to as a first positioning rotation period and a second positioning rotation period, respectively.

In this case, the sum total of the amounts of rotation in the rotation periods 401 to 403 in the analyzer cycle is set in advance. A requirement that the sum total of the amounts of rotation in the analyzer cycle needs to satisfy is that it is necessary for reaction vessels 2 to be able to be placed at all positions on the reaction disk 1. As described above, in the present embodiment, it is assumed that reaction vessels 2 placed at the even-numbered positions are used for immunoassay and reaction vessels 2 placed at the odd-numbered positions are used for biochemical measurement, and that a reaction vessel insertion position is a single common position for both biochemical measurement and immunoassay at each of the access positions illustrated in FIG. 2. To satisfy this, the amount of rotation in one analyzer cycle needs to be a distance corresponding to an odd number of reaction vessels, reaction vessels 2 need to be placed for biochemical measurement in one of continuous analyzer cycles, and reaction vessels 2 need to be placed for immunoassay in the other of the continuous analyzer cycles.

Since the biochemical measurement cycle is two analyzer cycles, when the number of reaction vessels placeable on the reaction disk 1 is N, the sum of sum totals of amounts of rotation in two continuous analyzer cycles is M (here, expressed as the number of reaction vessels corresponding to the amount of movement), the reaction disk 1 may be moved for $\alpha$ rotation $\pm$ two reaction vessels after $\beta$ measurement cycles. It should be noted that M is an even number since the amount of rotation in one analyzer cycle is an odd number. This constraint can be expressed as Equation 1.

$$\beta M = \alpha N \pm 2 \quad \cdots \quad (\text{Equation 1})$$

When Equation 1 is established, it is possible to finally fill the odd-numbered positions for biochemical measurement by shifting the placement position of a reaction vessel by two in a clockwise or counterclockwise direction every $\beta$ measurement cycles. When it is possible to fill the odd-numbered positions for biochemical measurement, the reaction vessels for immunoassay are always loaded into even-numbered positions that are separated from the placed reaction vessels for biochemical measurement by a distance which corresponds to a certain number of reaction vessels, so that all of the even-numbered positions can be filled.

For example, when N = 64, M = 50, $\alpha$ = 7, and $\beta$ = 9, $\beta M = \alpha N + 2 = 450$. Therefore, the sum M of sum totals of amounts of rotation in two continuous analyzer cycles is 50, the rotation that satisfies the above-described constraint can be obtained.

In addition, the photometric rotation period 401 needs to be set to move such that the amount of rotation is one rotation or more, that is, greater than or equal to N positions in order to perform absorbance measurement on all of the reaction vessels 2 placed on the reaction disk 1.

Based on the above description, the sum M of the sum totals of amounts of rotation in two continuous analyzer cycles is distributed to the two analyzer cycles (an odd-numbered analyzer cycle and an even-numbered analyzer cycle), and one rotation (N = 64) is added for photometric rotation to determine the sum total of amounts of rotation in the analyzer cycles. The specific amounts of rotation are determined based on the access positions from the mechanisms illustrated in FIG. 2. For example, when attention is paid to a certain reaction vessel, the time required to reach the second dispensing position from the first dispensing position, or the time required to reach the reaction vessel unloading position from the second dispensing position, is set to satisfy a reaction time defined for a standard biochemical measurement or immunoassay.

However, it is desirable to allocate one rotation or more (in this case, the movement for at least 64 reaction vessels) for the photometric rotation. This is to enable an absorbance measurement to be performed on all of the reaction vessels 2 during a period when the rotation of the reaction disk 1 is stable. In addition, the amount of rotation in the photometric rotation period 401 is a common fixed value in an odd-number analyzer cycle and an even-numbered analyzer cycle.

The remaining amount of rotation in the analyzer cycle is allocated to the amount of rotation in the first positioning rotation period 402 and the amount of rotation in the second positioning rotation period 403 so as to satisfy the amount of movement in the odd-numbered analyzer cycle and the amount of movement in the even-numbered analyzer cycle. As illustrated in FIG. 4, the first suspension period 405 is between the first positioning rotation period 402 and the second positioning rotation period 403, and the second suspension period 406 is between the second positioning rotation period 403 and the end of the analyzer cycle. Each of the mechanisms of the automatic analyzer 100 can access a reaction vessel 2 on the reaction disk 1 in the first suspension period 405 or the second suspension period 406. Although the photometric rotation period 401 and the first positioning rotation period 402 are illustrated separately for conceptual distinction, the reaction disk 1 may be continuously operated for the photometric rotation and the first positioning rotation.

Example 1

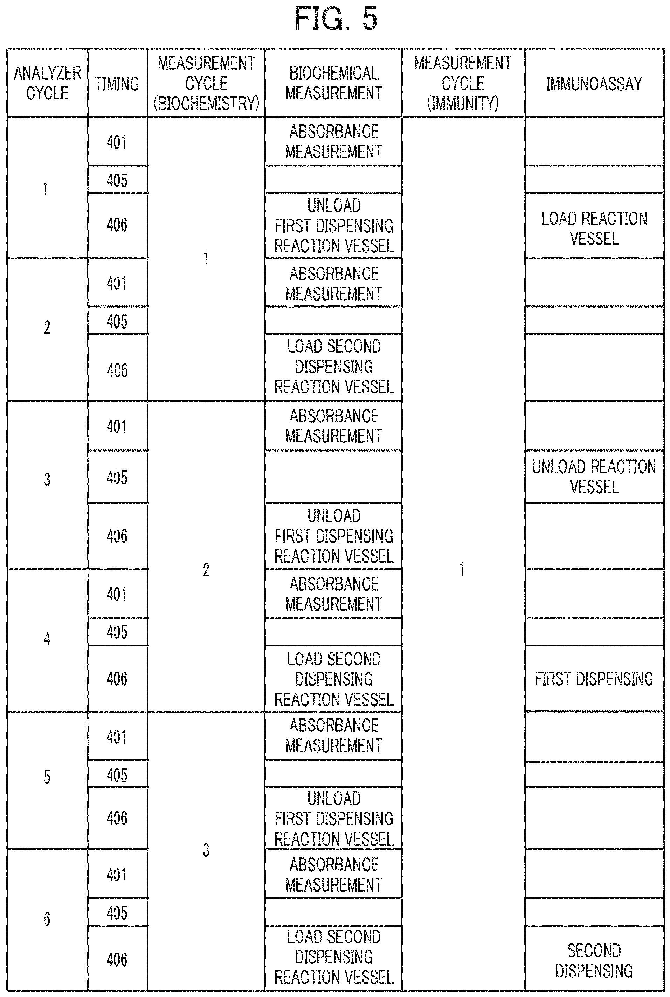

FIG. 5 illustrates an example of a timing at which each of the mechanisms of the automatic analyzer accesses the reaction disk 1. In the photometric rotation period 401, an access from the mechanisms is performed in the first suspension period 405 or the second suspension period 406 for the absorbance measurement.

In the timing example illustrated in FIG. 5, regarding the reaction disk 1 illustrated in FIG. 2, a distance corresponding to 93 (= 64 + 29) reaction vessels is set in odd-numbered analyzer cycles and a distance corresponding to 85 (= 64 + 21) reaction vessels is set in even-numbered analyzer cycles so as to satisfy the reaction time defined for the standard biochemical measurement or immunoassay, and amounts of rotation in the first positioning rotation period 402 and the second positioning rotation period 403 in each of the odd-numbered analyzer cycles, and amounts of rotation in the first positioning rotation period 402 and the second positioning rotation period 403 in the each of even-numbered analyzer cycles are allocated as fixed values.

In this manner, three biochemical measurement cycles and one immunoassay cycle are performed in parallel. As long as the sum total of amounts of rotation over the entire analyzer cycle is maintained, the amounts of rotation allocated to the first positioning rotation period 402 and the second positioning rotation period 403 may be either clockwise or counterclockwise. In this case, when the sum total of the amounts of rotation is to be calculated, for example, and a clockwise movement is calculated as a positive rotation amount, a counterclockwise movement is calculated as a negative rotation amount. Since the absorbance measurement is reliably performed in the photometric rotation period 401, it is not necessary to consider the timing of the absorbance measurement, and it is possible to increase the degree of freedom in determining cycle operations that can be performed while measurement procedures of a plurality of analysis item groups do not interfere with each other.

Example 2

In Example 1, the example in which the amounts of rotation in the first positioning rotation period 402 and the second positioning rotation period 403 are fixed values is described. Meanwhile, in Example 2, an example will be described in which the amounts of rotation in the first positioning rotation period 402 and the second positioning rotation period 403 are variable values. For example, when a measurement procedure that is not included in a standard measurement procedure is added, it is possible to support the measurement procedure by changing the amounts of rotation in the first positioning rotation period 402 and the second positioning rotation period 403 from the standard values (fixed amounts).

In this case, an example will be described in which a sample is dispensed from a sample vessel 5 into a reaction vessel 2 on the reaction disk 1 and diluted, and the diluted sample (diluted sample) is then dispensed again for biochemical measurement. For example, in the timing example illustrated in FIG. 5, in the first suspension period 405 of the first analyzer cycle, any mechanism does not perform access in both of the biochemical measurement cycle and the immunoassay cycle. In this case, by changing the amounts of rotation in the first positioning rotation period 402 and the second positioning rotation period 403 while maintaining the sum total of amounts of rotation in the first analyzer cycle, it is possible to add the procedure in the first suspension period 405 without disrupting the overall measurement procedure being performed by the automatic analyzer 100.

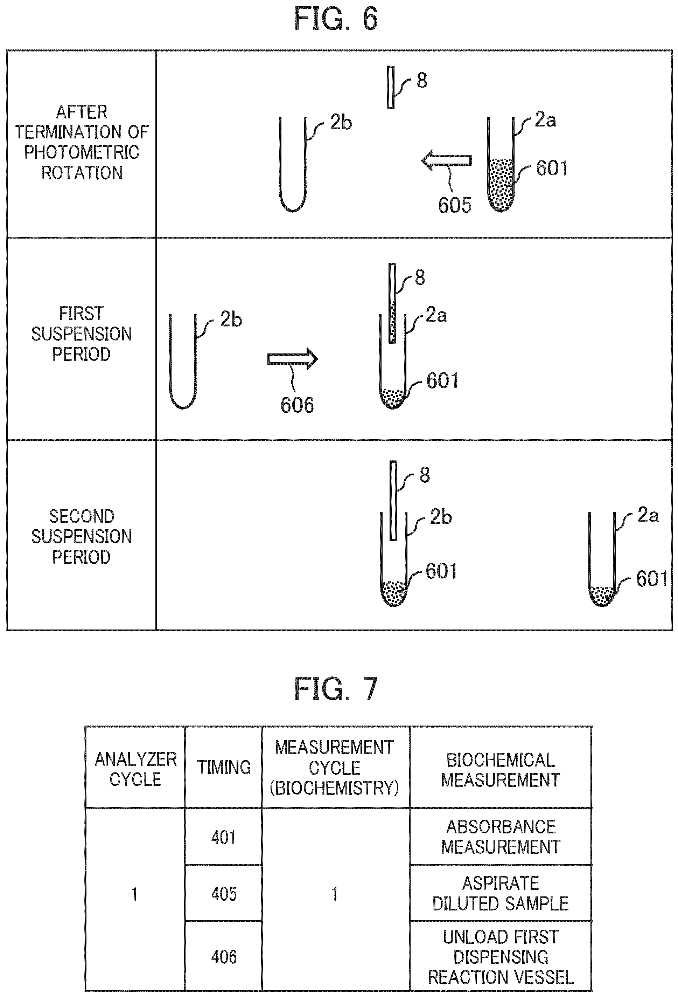

FIG. 6 illustrates a measurement procedure for dispensing the diluted sample in a reaction vessel 2a. FIG. 7 illustrates a rotation pattern of the reaction disk 1 corresponding to FIG. 6. In this example, it is assumed that the first analyzer cycle illustrated in FIG. 5 is an analyzer cycle in which a reaction vessel 2b is stopped at the first dispensing position 106 at the end of the analyzer cycle and the rotation pattern illustrated in FIG. 7 is performed.

An upper part of FIG. 6 illustrates a timing immediately after photometric rotation is ended. Before this, a diluted sample 601 obtained by dispensing a sample and a diluent is contained in the reaction vessel 2a. After the photometric rotation is ended, a first positioning rotation 605 is performed. A rotation amount of the first positioning rotation 605 is a distance from the placement position of the reaction vessel 2a to the first dispensing position 106. A middle part of FIG. 6 illustrates the first suspension period. The first dispensing unit 8 aspirates the diluted sample from the reaction vessel 2a. Thereafter, a second positioning rotation 606 is performed. A rotation amount of the first positioning rotation 605 is a distance from the placement position of the reaction vessel 2b to the first dispensing position 106. A lower part of FIG. 6 illustrates the second suspension period. The first dispensing unit 8 discharges the diluted sample into the reaction vessel 2b. Thereafter, a measurement procedure for second dispensing or the like is performed on the diluted sample stored in the reaction vessel 2b in accordance with the measurement cycle.

In this manner, by making the amounts of rotation in the first positioning rotation period 402 and the second positioning rotation period 403 variable, it is possible to flexibly support even a complex measurement procedure.

In this case, the example for biochemical measurement is described above, but the same applies to immunoassay. In addition, the above-described Examples are particularly useful when applied to the multifunction automatic analyzer that shares the reaction disk 1 for biochemical measurement and immunoassay to proceed with biochemical measurement and immunoassay in parallel, but the same idea is applicable to an automatic analyzer that performs only a biochemical measurement. For example, in an automatic analyzer in which a reaction vessel 2 is placed on a reaction disk 1 and absorbance measurement and positioning to an access position are performed by a rotation operation of the reaction disk 1, rotation for performing the absorbance measurement and rotation for the positioning to the access position are performed separately from each other and a plurality of positioning rotations are performed in one analyzer cycle. In addition, by allowing both clockwise positioning rotation and counterclockwise positioning rotation in each positioning period, the degree of freedom in movement can be improved. Further, by making variable the amounts of rotation in the positioning periods while maintaining the sum total of amounts of rotation in the analyzer cycle, more flexible support is possible. For example, when the number of reaction vessels placeable on the reaction disk 1 is N, the sum total of amounts of rotation in the analyzer cycle can be a distance corresponding to (N ± 1) reaction vessels.

The present invention is not limited to the above-described embodiments and include various modifications. For example, the embodiments and the modifications have been described in detail to make the present invention easier to understand, and the present invention is not necessarily limited to those including all of the configurations described. In addition, it is possible to replace a part of a configuration in a certain embodiment or modification with a configuration in another embodiment or modification, and it is also possible to add a configuration in another embodiment or modification to a configuration in a certain embodiment or modification. Further, regarding a part of the configuration in each of the embodiments and the modifications, another configuration can be added, removed, or replaced.

List of Reference Signs

1: reaction disk
2: reaction vessel
3: shared disk,
4: reagent vessel,
5: sample vessel,
6: reagent aspiration position,
7: sample aspiration position,
8: first dispensing unit,
9: second dispensing unit,
10: first pump,
11: second pump,
12: first washing chamber,
13: second washing chamber,
14: reagent stirring unit,
15: spectrophotometer,
16: detecting unit,
17: tip,
18: transport unit,
19: tray,
20: tray,
21: disposal box,
22: attachment position,
23: disposal position,
24: waste liquid tank,
25: water supply tank,
26: water supply tank,
27: cleaning fluid vessel,
30: controller,
31: control unit,
32: storage unit,
33: input unit,
34: display unit,
100: automatic analyzer
101: reaction vessel loading position,
102: reaction vessel unloading position (biochemistry),
103: reaction vessel unloading position (immunity),
104: third dispensing position,
105: fourth dispensing position,
106: first dispensing position,

107:    second dispensing position,
108:    optical axis
401:    photometric rotation period,
402:    first positioning rotation period,
403:    second positioning rotation period,
405:    first suspension period,
406:    second suspension period,
601:    diluted sample,
605:    first positioning rotation,
606:    second positioning rotation

**Claims**

1. An automatic analyzer comprising:

    a reaction disk with a plurality of reaction vessels placed on a circumference of a circle, the reaction disk being configured to be rotated;
    a dispensing unit that dispenses a liquid to the reaction vessel placed on the reaction disk;
    a spectrophotometer having an optical axis arranged so as to cross the circumference of a circle of the reaction disk; and
    a control unit,
    wherein: the control unit controls the reaction disk and the dispensing unit in synchronization with an analyzer cycle; and
    a sum total of an amount of rotation of the reaction disk in the analyzer cycle is set, and the analyzer cycle includes a photometric rotation period in which the reaction disk is rotated at one turn or more and a first positioning rotation period and a second positioning rotation period in which the reaction disk is stopped at a position corresponding to the sum total at an end of the analyzer cycle.

2. The automatic analyzer according to claim 1, wherein in the first positioning rotation period and the second positioning rotation period, the control unit enables the reaction disk to rotate clockwise or counterclockwise.

3. The automatic analyzer according to claim 1,

    wherein: the analyzer cycle includes a first suspension period between the first positioning rotation period and the second positioning rotation period and a second suspension period between the second positioning rotation period and the end of the analyzer cycle; and
    mechanisms that access the reaction disk access the reaction vessel that has stopped at an access position set for each of the mechanisms in the first suspension period or the second suspension period.

4. The automatic analyzer according to claim 3,

wherein the dispensing unit aspirates the liquid from the reaction vessel that has stopped at an access position set at the dispensing unit in the first suspension period, and the dispensing unit discharges the liquid to the reaction vessel that has stopped at an access position set at the dispensing unit in the second suspension period.

5. The automatic analyzer according to claim 3,

    wherein: a transport unit that loads the reaction vessel on the reaction disk is included;
    the control unit controls the transport unit in synchronization with the analyzer cycle; and
    the sum total of an amount of rotation of the reaction disk in the analyzer cycle is set such that the reaction vessel is placeable at arrangement positions of all reaction vessels on the reaction disk by loading the reaction vessel on the reaction disk by the transport unit at preset timing of the analyzer cycle.

6. The automatic analyzer according to any one of claims 1 to 5,

    wherein: the dispensing unit includes a rotating shaft, and the dispensing unit moves a dispensing nozzle on the arc track; and
    an access position set on the dispensing unit is located under the arc track.

7. The automatic analyzer comprising:

    the reaction disk with a plurality of the reaction vessels placed on a circumference of a circle, the reaction disk being configured to be rotated;
    a first dispensing unit that dispenses the liquid to the reaction vessel placed on the reaction disk;
    a second dispensing unit that dispenses the liquid to the reaction vessel placed on the reaction disk;
    the transport unit that loads the reaction vessel to the reaction disk;
    the spectrophotometer having the optical axis arranged so as to cross a circumference of a circle of the reaction disk; and
    the control unit,
    wherein: the control unit controls the reaction disk, the first dispensing unit, the second dispensing unit, and the transport unit in synchronization with the analyzer cycle;
    the sum total of the amount of rotation of the reaction disk in the analyzer cycle is set, the analyzer cycle includes a photometric rotation period in which the reaction disk is rotated at one turn or more, the first positioning rotation period and the second positioning rotation period in which the reaction disk is stopped at a position corresponding to the sum total at an end of the analyzer cycle,

the first suspension period between the first positioning rotation period and the second positioning rotation period, and a second suspension period between the second positioning rotation period and the end of the analyzer cycle;

the first dispensing unit, the second dispensing unit, and the transport unit access to the reaction vessel that has stopped at a set access position in the first suspension period or the second suspension period; and

the sum total of an amount of rotation of the reaction disk in the analyzer cycle is determined such that $\beta M = \alpha N \pm 2$ is satisfied where a number of the reaction vessels placeable on the reaction disk is N, the sum of the sum totals of amounts of rotation of two of the analyzer cycles that continue is M, and $\alpha$ and $\beta$ are constants.

8. The automatic analyzer according to claim 7, wherein the first dispensing unit is used for biochemical measurement, and the second dispensing unit is used for immunoassay.

9. The automatic analyzer according to claim 8,

wherein: the transport unit loads the reaction vessel at an arrangement position at which the reaction vessel is stopped at an access position set in common in the biochemical measurement and the immunoassay; and

the sum total of the amount of rotation of the analyzer cycle is a distance corresponding to an odd number of reaction vessels,

in the analyzer cycle subsequent to the analyzer cycle for which the reaction vessel used for the immunoassay is loaded, the reaction vessel used for the biochemical measurement is loaded.

10. The automatic analyzer according to claim 7, wherein in the first positioning rotation period and the second positioning rotation period, the controller enables the reaction disk to rotate clockwise or counterclockwise.

11. The automatic analyzer according to claim 10, wherein the first dispensing unit aspirates the liquid from the reaction vessel that has stopped at an access position set on the first dispensing unit in the first suspension period, and the first dispensing unit discharges the liquid to the reaction vessel that has stopped at an access position set on the first dispensing unit in the second suspension period, or the second dispensing unit aspirates the liquid from the reaction vessel that has stopped at an access position set on the second dispensing unit in the first suspension period, and the second dispensing unit discharges the liquid to the reaction vessel that has stopped at an access position set on the second dispensing unit in the second suspension period.

12. The automatic analyzer according to any one of claims 7 to 11,

wherein: the first dispensing unit includes the rotating shaft, and the first dispensing unit moves a first dispensing nozzle on a first arc track;

the second dispensing unit includes the rotating shaft, and the second dispensing unit moves a second dispensing nozzle on a second arc track;

an access position set on the first dispensing unit is located under the first arc track; and

an access position set on the second dispensing unit is located under the second arc track.

# FIG. 1

# FIG. 2

# FIG. 3

| BIOCHEMICAL MEASUREMENT | FIRST DISPENSING | SECOND DISPENSING | FIRST DISPENSING | SECOND DISPENSING | FIRST DISPENSING | SECOND DISPENSING | ... |

| IMMUNOASSAY | FIRST DISPENSING | SECOND DISPENSING | ... |

0          20          40          60 [s]

☐ : ANALYZER CYCLE

▣ : MEASUREMENT CYCLE

# FIG. 4

401   402   405   403   406

0                                    10s

# FIG. 5

| ANALYZER CYCLE | TIMING | MEASUREMENT CYCLE (BIOCHEMISTRY) | BIOCHEMICAL MEASUREMENT | MEASUREMENT CYCLE (IMMUNITY) | IMMUNOASSAY |
|---|---|---|---|---|---|
| 1 | 401 | 1 | ABSORBANCE MEASUREMENT | | |
| 1 | 405 | | | | |
| 1 | 406 | | UNLOAD FIRST DISPENSING REACTION VESSEL | | LOAD REACTION VESSEL |
| 2 | 401 | | ABSORBANCE MEASUREMENT | | |
| 2 | 405 | | | | |
| 2 | 406 | | LOAD SECOND DISPENSING REACTION VESSEL | | |
| 3 | 401 | 2 | ABSORBANCE MEASUREMENT | 1 | |
| 3 | 405 | | | | UNLOAD REACTION VESSEL |
| 3 | 406 | | UNLOAD FIRST DISPENSING REACTION VESSEL | | |
| 4 | 401 | | ABSORBANCE MEASUREMENT | | |
| 4 | 405 | | | | |
| 4 | 406 | | LOAD SECOND DISPENSING REACTION VESSEL | | FIRST DISPENSING |
| 5 | 401 | 3 | ABSORBANCE MEASUREMENT | | |
| 5 | 405 | | | | |
| 5 | 406 | | UNLOAD FIRST DISPENSING REACTION VESSEL | | |
| 6 | 401 | | ABSORBANCE MEASUREMENT | | |
| 6 | 405 | | | | |
| 6 | 406 | | LOAD SECOND DISPENSING REACTION VESSEL | | SECOND DISPENSING |

# FIG. 6

| | |
|---|---|
| AFTER TERMINATION OF PHOTOMETRIC ROTATION | 8, 2b, 2a, 601, 605 |
| FIRST SUSPENSION PERIOD | 2b, 8, 2a, 601, 606 |
| SECOND SUSPENSION PERIOD | 8, 2b, 601, 2a, 601 |

# FIG. 7

| ANALYZER CYCLE | TIMING | MEASUREMENT CYCLE (BIOCHEMISTRY) | BIOCHEMICAL MEASUREMENT |
|---|---|---|---|
| 1 | 401 | 1 | ABSORBANCE MEASUREMENT |
| | 405 | | ASPIRATE DILUTED SAMPLE |
| | 406 | | UNLOAD FIRST DISPENSING REACTION VESSEL |

## INTERNATIONAL SEARCH REPORT

| | International application No. |
|---|---|
| | **PCT/JP2024/001485** |

**A. CLASSIFICATION OF SUBJECT MATTER**

*G01N 35/04*(2006.01)i; *G01N 35/02*(2006.01)i

FI:   G01N35/04 A; G01N35/02 G

According to International Patent Classification (IPC) or to both national classification and IPC

**B. FIELDS SEARCHED**

Minimum documentation searched (classification system followed by classification symbols)

G01N35/00-37/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2014-206381 A (HITACHI HIGH-TECHNOLOGIES CORP.) 30 October 2014 (2014-10-30) | 1-12 |
| A | WO 2021/229970 A1 (FURUNO ELECTRIC COMPANY, LIMITED) 18 November 2021 (2021-11-18) | 1-12 |
| A | JP 2014-106166 A (HITACHI HIGH-TECHNOLOGIES CORP.) 09 June 2014 (2014-06-09) | 1-12 |
| A | JP 03-033658 A (HITACHI, LTD.) 13 February 1991 (1991-02-13) | 1-12 |
| A | JP 62-059862 A (TOSHIBA CORP.) 16 March 1987 (1987-03-16) | 1-12 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **21 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/001485**

| Patent document cited in search report | | | Publication date (day/month/year) | Patent family member(s) | | | Publication date (day/month/year) |
|---|---|---|---|---|---|---|---|
| JP | 2014-206381 | A | 30 October 2014 | (Family: none) | | | |
| WO | 2021/229970 | A1 | 18 November 2021 | US | 2023/0084681 | A1 | |
| | | | | EP | 4152007 | A1 | |
| | | | | CN | 113654988 | A | |
| JP | 2014-106166 | A | 09 June 2014 | (Family: none) | | | |
| JP | 03-033658 | A | 13 February 1991 | (Family: none) | | | |
| JP | 62-059862 | A | 16 March 1987 | US | 4908186 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020217636 A